# FASCICULE DE BREVET EUROPEEN

(11) **EP 2 127 270 B1**
(45) Date de publication et mention de la délivrance du brevet: **02.08.2017**
(21) Numéro de dépôt: 08762160.3
(22) Date de dépôt: 26.02.2008
(51) Int. Cl.: H04L 12/70

(54) **MÉCANISME DE PROTECTION D'UN PSEUDO-LIEN**
MECHANISMUS ZUM SCHUTZ EINER PSEUDOVERBINDUNG
MECHANISM FOR PROTECTING A PSEUDO LINK

(30) Priorité: 26.02.2007 FR 0753489
(43) Date de publication de la demande: 02.12.2009
(73) Titulaire: Orange, 75015 Paris (FR)
(72) Inventeur: JOUNAY, Frédéric, F-22560 Pleumeur Bodou (FR); NIGER, Philippe, F-22300 Lannion (FR); CAUVIN, Arnaud, F-75011 Paris (FR)
(86) Numéro de dépôt international: PCT/FR2008/050324
(87) Numéro de publication internationale: WO 2008/110735

(56) Documents cités:
- PAN (HAMMERHEAD SYSTEMS) M BOCCI MUSTAPHA AISSAOUI (ALCATEL) FLORIN BALUS HAMID OULD-BRAHIM (NORTEL) P: "Pseudo Wire Protection; draft-pan-pwe3-protection-03.txt" IETF STANDARD-WORKING-DRAFT, INTERNET ENGINEERING TASK FORCE, IETF, CH, no. 3, 1 juillet 2006 (2006-07-01), XP015047198 ISSN: 0000-0004
- BOCCI ALCATEL S BRYANT CISCO SYSTEMS M: "An Architecture for Multi-Segment Pseudo Wire Emulation Edge-to-Edge; draft-ietf-pwe3-ms-pw-arch-02.txt" IETF STANDARD-WORKING-DRAFT, INTERNET ENGINEERING TASK FORCE, IETF, CH, vol. pwe3, no. 2, 20 octobre 2006 (2006-10-20), XP015048046 ISSN: 0000-0004 cité dans la demande
- CCAMP GMPLS P&R DESIGN TEAM ERIC MANNIE DIMITRI PAPADIMITRIOU: "Recovery (Protection and Restoration) Terminology for Generalized Multi-Protocol Label Switching (GMPLS); draft-ietf-ccamp-gmpls-recove ry-terminology-05.txt;" IETF STANDARD-WORKING-DRAFT, INTERNET ENGINEERING TASK FORCE, IETF, CH, vol. ccamp, no. 5, octobre 2004 (2004-10), XP015016585 ISSN: 0000-0004
- LUCA MARTINI (ED) CISCO SYSTEMS INC MATTHEW BOCCI (ED) ALCATEL FLORIN BALUS (ED) ALCATEL: "Dynamic Placement of Multi Segment Pseudo Wires; draft-ietf-pwe3-dynamic-ms-pw-02.txt" IETF STANDARD-WORKING-DRAFT, INTERNET ENGINEERING TASK FORCE, IETF, CH, vol. pwe3, no. 2, octobre 2006 (2006-10), XP015048043 ISSN: 0000-0004

## Description

L'invention se situe dans le domaine des télécommunications, et plus particulièrement le domaine des réseaux de commutation de paquets.

Dans un réseau de commutation de paquets ou Paquet Switched Network en anglais, les données à transmettre se présentent sous forme de paquets traités par des routeurs du réseau jusqu'à atteindre leur destination. L'ensemble des paquets à transmettre constitue un flux de données.

Un exemple de technologie utilisé dans les réseaux de commutation de paquets pour acheminer des paquets de données, est la technologie MPLS (MultiProtocol Label Switching ou en français : commutation multi-protocole par étiquette). La technologie MPLS propose de rajouter en entête des paquets de données une ou plusieurs étiquettes contenant des informations permettant aux routeurs du réseau de déterminer le prochain saut qu'un paquet doit effectuer pour atteindre sa destination. La technologie MPLS est décrit plus en détail dans un document de l'IETF (groupe de standardisation de l'Internet, abréviation des termes anglais Internet Engineering Task Force), référencé RFC 3031 (RFC signifiant "requête pour commentaires, ou en anglais Request For Comments).

Cependant, le protocole MPLS ne permet de traiter que des paquets conformes au protocole IP (Internet Protocol, ou protocole internet).

Afin de palier cet inconvénient, le groupe de standardisation PWE3 (PseudoWire Emulation Edge to Edge) de l'IETF définit un concept de pseudo-lien permettant d'émuler un lien point à point entre deux équipements d'un réseau de commutation de paquets reposant sur la technologie IP/MPLS. De tels pseudo-liens, définis dans le document RFC 3985, permettent la transmission de paquets de données non-conformes au protocole IP, tels que par exemple des paquets de données conformes au protocole ATM.

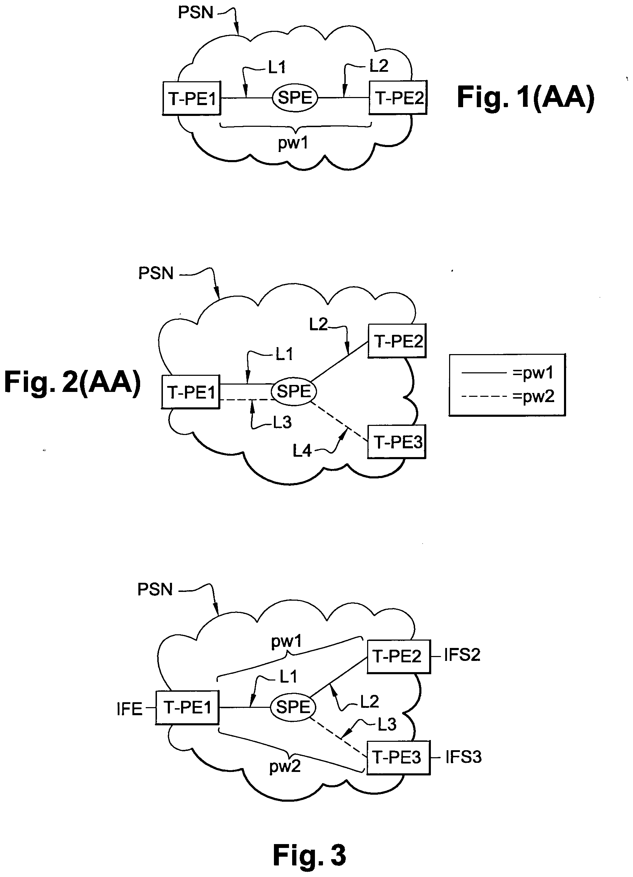

En référence à la figure 1, un pseudo-lien pw1 est établi entre un premier routeur T-PE1 disposé en bordure d'un réseau de commutation de paquets PSN et un deuxième routeur T-PE2 également disposé en bordure du réseau PSN. Une première liaison L1 constitutive du pseudo-lien pw1 est établie entre le routeur d'entrée et un routeur intermédiaire S-PE du réseau PSN. Une deuxième liaison L2, elle aussi constitutive du pseudo-lien pw1, est, quant à elle, établie entre le routeur intermédiaire S-PE et le deuxième routeur T-PE2. Le premier routeur T-PE1 est appelé routeur d'entrée et constitue une première extrémité du pseudo-lien pw1 et le deuxième routeur T-PE2, est appelé routeur de sortie et constitue une deuxième extrémité du pseudo-lien pw1. Une fois le pseudo-lien pw1 établi, le routeur d'entrée T-PE1 émet un flux de données acheminé via le pseudo-lien pw1 jusqu'au routeur de sortie T-PE2. Un tel pseudo-lien pw1 est défini plus en détail dans le document « An Architecture for Multi-Segment Pseudo-Wire Emulation Edge-to-Edge. draft-ietf-pwe3-ms-pw-arch-02.txt ».

Afin d'assurer la continuité du service en cas de défaillance du routeur de sortie, le groupe de travail PWE3 propose une solution consistant à doubler le premier pseudo-lien, établi entre le routeur d'entrée et le routeur de sortie, par un deuxième pseudo-lien servant de pseudo-lien de secours de sorte que, lorsque le routeur de sortie constituant une extrémité du premier pseudo-lien tombe en panne les paquets de données sont acheminés au moyen du pseudo-lien de secours dont une extrémité est constituée par un routeur de sortie différent.

Ainsi, en référence à la figure 2, un premier pseudo-lien pw1 est établi entre un routeur d'entrée T-PE1 disposé en bordure d'un réseau de commutation de paquets PSN et un routeur de sortie T-PE2 également disposé en bordure du réseau PSN. Une première liaison L1 constitutive du pseudo-lien pw1 est établie entre le routeur d'entrée T-PE1 et un routeur intermédiaire S-PE du réseau PSN. Une deuxième liaison L2, elle aussi constitutive du pseudo-lien pw1, est établie entre le routeur intermédiaire S-PE et le routeur de sortie T-PE2. Un deuxième pseudo-lien pw2 est ensuite établi entre le routeur d'entrée T-PE1, constituant une première extrémité du pseudo-lien, et un deuxième routeur de sortie T-PE3 constituant une deuxième extrémité du pseudo-lien. Une première liaison L3 constitutive du deuxième pseudo-lien est établie entre le routeur d'entrée T-PE1 et le routeur intermédiaire S-PE et une seconde liaison L4, également constitutive du deuxième pseudo-lien est établie entre le routeur intermédiaire S-PE et le deuxième routeur de sortie T-PE3.

Afin d'assurer la continuité du service, le routeur d'entrée T-PE1 comporte des moyens mettant en oeuvre une fonction de détection d'une panne du premier routeur de sortie T-PE2 et une fonction de basculement du flux des données du premier pseudo-lien pw1 vers le deuxième pseudo-lien pw2.

Lorsqu'une défaillance intervient au niveau du premier routeur de sortie T-PE2, celle-ci est détectée au niveau du routeur d'entrée T-PE1, par exemple à partir d'un message indiquant l'apparition d'une défaillance émis à travers le réseau PSN à destination du routeur d'entrée T-PE1. Une fois informé de la défaillance, le routeur d'entrée T-PE1 déclenche le basculement du flux de données du premier pseudo-lien pw1 vers le deuxième pseudo-lien pw2 assurant ainsi l'acheminement des données vers le routeur de sortie T-PE3.

Cependant, une telle solution présente l'inconvénient d'être consommatrice en ressources du réseau telles que par exemple des ressources de traitement au niveau des équipements (capacité de mémoire de stockage, capacité de calcul, etc ;), les flux de signalisation en vu de l'établissement des deux pseudo-liens, la bande passante, notamment entre le routeur d'entrée et le routeur intermédiaire. Ceci a pour conséquence un allongement du temps de restauration en cas de défaillance d'un routeur de sortie impactant de manière négative sur la qualité de service.

Le document « Pseudo-Wire Protection, draft-pan-pwe3-protection-03.txt » enseigne un procédé d'établissement de pseudo-liens de secours selon lequel des informations sont ajoutées à chaque demande d'établissement d'un pseudo-lien de secours, afin, d'une part, de l'identifier comme pseudo-lien de secours protégeant un autre pseudo-lien, et afin, d'autre part, d'établir un ordre de priorité entre les différents pseudo-liens de secours protégeant un même pseudo-lien, mais ce procédé requiert un flux de signalisation pour l'établissement de chaque pseudo-lien de secours, en plus du flux de signalisation requis pour l'établissement du pseudo-lien à protéger.

La solution proposée dans le cadre de l'invention ne présente pas ces inconvénients de l'art antérieur.

L'invention concerne un procédé de diffusion de flux de données au travers d'au moins un premier pseudo-lien, comprenant une étape de réception d'un message d'établissement du premier pseudo-lien constitué d'une première liaison entre un routeur d'entrée et un routeur intermédiaire, et d'une deuxième liaison établie entre le routeur intermédiaire et un premier routeur de sortie, lesdits routeurs appartenant à un réseau de commutation de paquets, mis en oeuvre par le routeur intermédiaire, le premier pseudo-lien étant apte à diffuser le flux de données,
le message concernant en outre l'établissement d'un deuxième pseudo-lien constitué de ladite première liaison et d'une troisième liaison établie entre le routeur intermédiaire et le deuxième routeur de sortie, ladite première liaison étant commune aux deux pseudo-liens,
le message d'établissement comportant un identifiant dudit routeur d'entrée, un identifiant du premier routeur de sortie, et un champ comprenant un identifiant du deuxième routeur de sortie ainsi qu'un paramètre précisant que le deuxième pseudo-lien est un pseudo-lien de secours, et
le procédé de diffusion comportant une étape d'ajout desdits identifiants et dudit paramètre dans une table de commutation, une étape d'établissement du premier pseudo-lien et du deuxième pseudo-lien, et une étape de basculement, sur réception d'un message de basculement, ou sur détection d'une défaillance du premier routeur de sortie, de la diffusion du flux de données vers le deuxième pseudo-lien à l'aide de ladite table.

En effet, la solution repose sur un procédé d'établissement d'au moins deux pseudo-liens aptes à diffuser un flux de données, le premier pseudo-lien étant établi entre un routeur d'entrée et un premier routeur de sortie, le deuxième pseudo-lien étant établi entre ledit routeur d'entrée et un deuxième routeur de sortie, lesdits routeurs d'entrée et de sortie appartenant à un réseau de commutation de paquets, une première liaison constitutive du premier pseudo-lien étant établie entre le premier routeur de sortie et un routeur intermédiaire appartenant audit réseau, et une deuxième liaison constitutive du deuxième pseudo-lien étant établie entre le deuxième routeur de sortie et ledit routeur intermédiaire,

Un tel procédé d'établissement est particulier en ce qu'une liaison constitutive des deux pseudo-liens, est établie entre ledit routeur intermédiaire et ledit routeur d'entrée.

De cette manière, on optimise l'utilisation des ressources du réseau, telle que la bande passante, entre le routeur d'entrée et le routeur intermédiaire en établissant, entre ces deux équipements, une liaison unique commune aux deux pseudo-liens. Cette solution n'a jamais été envisagée dans l'art antérieur. En effet, dans l'art antérieur, lorsqu'un pseudo-lien principal et un pseudo-lien de secours sont établis entre un routeur d'entrée et un premier, respectivement, un deuxième routeur de sortie, une liaison est établie entre le routeur d'entrée et le routeur intermédiaire pour chaque pseudo-lien, soit deux liaisons. L'homme du métier a en effet toujours considéré un pseudo-lien comme une liaison point à point établie entre un routeur d'entrée et un routeur de sortie, de sorte qu'à chaque couple routeur d'entrée/routeur de sortie, est associé un pseudo-lien. En outre, une telle approche est préconisée dans les normes.

Allant à l'encontre de ces préjugés de l'homme du métier, les inventeurs de la présente demande proposent, au contraire, de mettre en commun la liaison établie entre le routeur d'entrée et le routeur intermédiaire ce qui permet d'améliorer l'utilisation des ressources du réseau et ainsi de réduire le temps de restauration en cas de défaillance du premier routeur de sortie. En effet dans l'état de l'art, le pseudo-lien de secours, bien que n'étant utilisé pour diffuser les données que lorsque le pseudo-lien principal est défaillant, réserve, de part son établissement, des ressources sur l'ensemble du réseau entre le routeur d'entrée et le routeur de sortie. En rendant commune au pseudo-lien principal et au pseudo-lien de secours la liaison établie entre le routeur d'entrée et le routeur intermédiaire, les ressources du réseau précédemment réservées pour le pseudo-lien de secours sont libérées et peuvent être utilisées de manière plus optimale.

Dans une telle réalisation, les première, deuxième et troisième liaisons ne sont pas forcément des liaisons directes entre les différents routeurs. Ainsi, par exemple, la deuxième liaison établie entre le routeur intermédiaire et le premier routeur de sortie peut comprendre un ou plusieurs sauts et traverser, éventuellement, un ou plusieurs autres routeurs intermédiaires avant d'atteindre le routeur de sortie. il en est de même pour la liaison établie entre le routeur d'entrée et le routeur intermédiaire et pour la liaison établie entre le routeur intermédiaire et le deuxième routeur de sortie.

Les données diffusées dans les pseudo-liens peuvent être des données utiles, comme par exemple un flux ATM transportant un service ou encore des données de services, telle que par exemple un message de détection de défaillance d'un équipement du réseau. Ainsi dans le cas d'échanges de données de services, la solution proposée dans la présente demande permet d'améliorer la réactivité des équipements présents dans le réseau.

Selon une caractéristique du procédé de diffusion objet de l'invention, les pseudo-liens sont établis à l'initiative du routeur d'entrée par émission, à destination du routeur intermédiaire, d'un message d'établissement de ladite troisième liaison comportant un identifiant dudit routeur d'entrée, un identifiant du premier routeur de sortie, et un champ comprenant un identifiant du deuxième routeur de sortie ainsi qu'un paramètre précisant que le deuxième pseudo-lien est un pseudo-lien de secours.

Dans une telle réalisation, l'établissement des pseudo-liens est à l'initiative du routeur d'entrée. Afin de pouvoir initier l'établissement des pseudo-liens principaux et de secours, on suppose, dans le cadre de l'invention, que le routeur d'entrée possède, dans une table de routage, les informations sur les sauts à effectuer pour atteindre les premiers et deuxièmes routeurs de sortie. Grâce à ces informations, le routeur d'entrée sait à destination de quel routeur du réseau, qui est considéré alors comme le routeur intermédiaire, il doit envoyer le message d'établissement des pseudo-liens. Il n'est alors nécessaire de configurer que le routeur d'entrée, ce qui allège les opérations de maintenance du réseau. Le paramètre, compris dans le message d'établissement et indiquant que le deuxième pseudo-lien est un pseudo-lien de secours, permet de configurer le routeur intermédiaire, en vue de la diffusion ultérieure des données.

Dans le procédé de diffusion de flux de données entre un routeur d'entrée et un premier routeur de sortie, lesdits routeurs appartenant à un réseau à commutation de paquets, un flux de données étant diffusé dans un premier pseudo-lien constitué d'une première liaison établie entre ledit routeur d'entrée et un routeur intermédiaire appartenant audit réseau et d'une deuxième liaison établie entre ledit routeur intermédiaire et ledit premier routeur de sortie, est comprise une étape de détection d'une défaillance du premier routeur de sortie.

Le procédé de diffusion comporte, en outre, une étape de basculement, sur réception, par le routeur intermédiaire, d'une information de défaillance, du flux de données sur une troisième liaison établie entre ledit routeur intermédiaire et un deuxième routeur de sortie, ladite première liaison et ladite troisième liaison constituant un deuxième pseudo-lien.

Une telle réalisation permet d'améliorer le temps de restauration en cas de défaillance du premier routeur de sortie puisque le basculement du flux de données intervient au plus près de la défaillance.

L'invention a, en outre, pour objet un routeur destiné à être connecté par une première liaison à un routeur d'entrée et par une deuxième liaison à un premier routeur de sortie, lesdits routeurs ainsi connectés appartenant à un réseau de commutation de paquets, lesdites premières et deuxièmes liaisons étant constitutives d'un premier pseudo-lien apte à diffuser un flux de données.

Ce routeur comprend : des moyens de réception d'un premier message d'établissement de la première liaison, comportant un identifiant dudit routeur d'entrée, un identifiant du premier routeur de sortie, et un champ contenant un identifiant d'un deuxième routeur de sortie appartenant au réseau, des moyens d'émission d'un deuxième message d'établissement de ladite deuxième liaison et d'un troisième message d'établissement d'une troisième liaison entre ledit routeur et ledit deuxième routeur de sortie, le deuxième message comportant l'identifiant du routeur d'entrée, et l'identifiant du premier routeur de sortie, le troisième message comportant l'identifiant du routeur d'entrée et l'identifiant du deuxième routeur de sortie, lesdites première et troisième liaisons constituant un deuxième pseudo-lien, et des moyens de configuration d'au moins une table de commutation, en vu de ladite diffusion avec un paramètre précisant que le deuxième pseudo-lien est un pseudo-lien de secours, ledit paramètre étant compris dans le premier message d'établissement.

Un tel routeur intermédiaire est apte à établir sur réception d'un message d'établissement émis par le routeur d'entrée deux pseudo-liens ayant une liaison commune entre le routeur d'entrée et le routeur de sortie puis une liaison propre entre le routeur intermédiaire et un premier, respectivement, un deuxième routeur de sortie. Ceci permet une optimisation des ressources du réseau entre le premier routeur et le routeur intermédiaire ce qui a pour conséquence l'amélioration du temps de restauration lors de la détection d'une défaillance intervenant au niveau du premier routeur de sortie.

Selon une autre caractéristique, le routeur selon l'invention comporte des moyens de détection d'une défaillance du premier routeur de sortie et des moyens de basculement du flux de données de la deuxième liaison vers la troisième liaison.

En embarquant une fonction de détection d'une défaillance du premier routeur de sortie et une fonction de basculement du flux de données dans le routeur intermédiaire, on améliore le temps de restauration lors de la détection d'une défaillance intervenant au niveau du premier routeur de sortie.

Ceci a pour conséquence une amélioration de la réactivité réseau car la détection intervient au plus près de la défaillance. Ainsi, la défaillance du premier routeur de sortie est détectée plus rapidement, l'information n'ayant pas à traverser le réseau jusqu'au routeur d'entrée avant d'être traitée. La fonction de basculement du flux de données étant également embarquée dans le routeur intermédiaire, le basculement du flux de données vers la troisième liaison, établie entre le routeur intermédiaire et le deuxième routeur de sortie et constitutive avec la première liaison du pseudo-lien de secours, intervient plus rapidement puisque le basculement est déclenché à détection de la défaillance par le routeur intermédiaire.

Une telle solution permet de diminuer la quantité de données perdues consécutivement à la défaillance du premier routeur de sortie.

L'invention concerne un produit programme d'ordinateur téléchargeable depuis un réseau de communication et/ou enregistré sur un support lisible par ordinateur et/ou exécutable par un processeur, un tel produit programme d'ordinateur comprend des instructions de code de programme pour la mise en oeuvre du procédé de diffusion objet de l'invention lorsque ledit programme est exécuté par un ordinateur.

D'autres caractéristiques et avantages apparaîtront à la lecture de modes de réalisation préférés décrits en référence aux dessins dans lesquels :
- la figure 1 représente un pseudo-lien établi conformément à l'état de l'art, entre un routeur d'entrée et un routeur de sortie appartenant à un réseau de commutation de paquets,
- la figure 2 représente la solution mise en oeuvre dans l'état de l'art afin d'assurer la continuité du service dans un réseau de commutation de paquets,
- la figure 3 représente deux pseudo-liens établis conformément au procédé d'établissement objet de l'invention,
- la figure 4 propose un diagramme temporel d'échanges de requêtes entre un routeur d'entrée et un routeur intermédiaire appartenant à un réseau de commutation de paquets d'une part et le routeur intermédiaire et un premier et un deuxième routeur de sortie d'autre part, afin d'établir des pseudo-liens, conformément au procédé d'établissement objet de l'invention,
- la figure 5 représente de manière schématique les tables de routage et de commutation d'un routeur intermédiaire conforme à l'invention,
- les figures 6A, 6B et 6C représentent des messages d'établissement utilisés dans le procédé d'établissement objet de l'invention,
- la figure 7 propose un diagramme temporel d'échanges de messages entre un routeur d'entrée et un routeur intermédiaire appartenant à un réseau de commutation de paquets d'une part et le routeur d'entrée et un premier et un deuxième routeur de sortie d'autre part, lors de la diffusion de données dans les pseudo-liens établis dans le réseau de commutation de paquets, dans un premier mode de réalisation de l'invention,
- la figure 8 propose un diagramme temporel d'échanges de messages entre un routeur d'entrée et un routeur intermédiaire appartenant à un réseau de commutation de paquets d'une part et le routeur intermédiaire et un premier et un deuxième routeur de sortie d'autre part, lors de la diffusion de données dans les pseudo-liens établis dans le réseau de commutation de paquets, dans un deuxième mode de réalisation de l'invention,
- la figure 9 illustre deux pseudo-liens établis conformément au procédé d'établissement objet de l'invention selon un troisième mode de réalisation de l'invention,
- la figure 10 propose un diagramme temporel d'échanges de requêtes entre un premier routeur d'extrémité et des routeurs de intermédiaire appartenant à un réseau de commutation de paquets d'une part et les routeurs de intermédiaire et un deuxième et un troisième routeur d'extrémité d'autre part, afin d'établir des pseudo-liens, conformément au procédé d'établissement selon le troisième mode de réalisation de l'invention,
- les figures 11 A, 11 B, 11C représentent des messages d'établissement utilisés dans le procédé d'établissement selon le troisième mode de réalisation de l'invention,
- la figure 12 propose un diagramme temporel d'échanges de messages entre un routeur d'extrémité et un routeur de intermédiaire appartenant à un réseau de intermédiaire de paquets d'une part et le routeur intermédiaire et un deuxième et un troisième routeur d'extrémité d'autre part, lors de la diffusion de données dans les pseudo-liens établis dans le réseau de commutation de paquets, selon le troisième mode de réalisation de l'invention.

La figure 3 représente une connexion établie entre un routeur d'entrée T-PE1 et deux routeurs de sortie T-PE2 et T-PE3, chacun de ces trois routeurs étant disposé en bordure d'un réseau de commutation de paquets PSN.

En référence à cette figure, une première liaison L1 est établie entre le routeur d'entrée T-PE1 et un routeur intermédiaire S-PE appartenant au réseau PSN. Une deuxième liaison L2 est établie entre le routeur intermédiaire S-PE et le premier routeur de sortie T-PE2. La première et la deuxième liaison constituent un premier pseudo-lien pw1 établissant une connexion entre le routeur d'entrée T-PE1 et le premier routeur de sortie T-PE2. Le pseudo-lien pw1 ainsi établi permet de diffuser des flux de données découpées en paquets entre le routeur d'entrée T-PE1 et le premier routeur de sortie T-PE2.

Un deuxième pseudo-lien pw2 est établi entre le routeur d'entrée T-PE1 le deuxième routeur de sortie T-PE3. Le pseudo-lien pw2 est constitué de la première liaison L1 et d'une deuxième liaison L3 établie entre le routeur intermédiaire S-PE et le deuxième routeur de sortie T-PE3.

Ainsi, la première liaison L1 est commune aux deux pseudo-liens pw1 et pw2. Une telle solution permet d'optimiser les ressources du réseau, telles que la bande passante, entre le routeur d'entrée T-PE1 et le routeur intermédiaire S-PE puisqu'une unique liaison est établie entre ces deux routeurs.

Un exemple d'application de l'invention est la collecte de trafic pour un réseau mobile. Dans un tel exemple, le routeur d'entrée T-PE1 est connecté à un premier équipement tel qu'une station de base (non représentée sur les figures) dont il assure la transmission des données vers d'autres équipements d'agrégation tels que un RNC (Radio Network Controller, ou contrôleur de réseau radio en français), connectés aux routeurs de sortie T-PE2 et T-PE3.

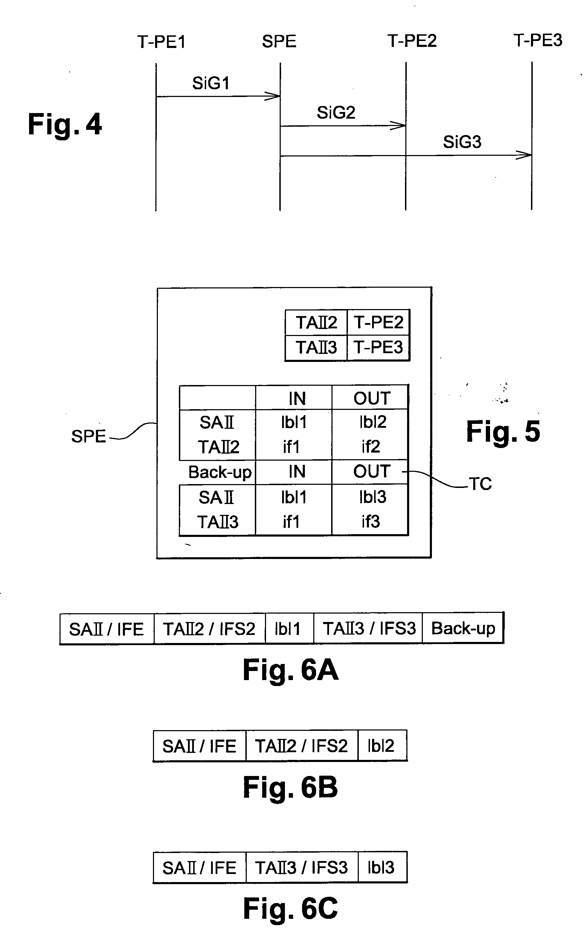

La figure 4 représente un diagramme temporel d'échange de messages entre les routeurs d'entrée T-PE1, intermédiaire S-PE et de sortie T-PE2 et T-PE3 lors de l'établissement des pseudo-liens pw1 et pw2.

Conformément à l'invention, l'établissement des pseudo-liens pw1 et pw2 est à l'initiative du routeur d'entrée T-PE1 et repose sur l'échange de messages d'établissement conformes au protocole LDP (Label Distribution Protocol, ou protocole de distribution d'étiquette en français) tel que défini dans les documents RFC3036 et RFC4477. Ainsi, un premier message d'établissement SIG1 est émis par le routeur d'entrée T-PE1 à destination du routeur intermédiaire S-PE. Ce premier message d'établissement comporte un identifiant SAII du routeur d'entrée T-PE1, un identifiant d'une interface d'entrée IFE associée à un équipement connecté au routeur d'entrée, un identifiant TAII2 du premier routeur de sortie T-PE2, un identifiant d'une interface de sortie IFS2 associée à un équipement connecté au premier routeur de sortie T-PE2, ainsi qu'un champ comportant un identifiant TAII3 du deuxième routeur de sortie T-PE3, un identifiant d'une interface de sortie IFS3 associée à un équipement connecté au premier routeur de sortie T-PE3, et un paramètre « backup » précisant que le deuxième pseudo-lien est un pseudo-lien de secours. Un tel message d'établissement SIG1 est représenté à la figure 6A.

Le couple {identifiant SAII du routeur d'entrée T-PE1/interface d'entrée associée IFE ; identifiant TAII2 du premier routeur de sortie T-PE2/interface de sortie associée IFS2} constitue une FEC (*Forwarding Equivalent Class,* ou en français classe équivalente de transfert. Ces informations sont nécessaires à l'établissement d'un pseudo-lien. Le couple constitué par l'identifiant SAII du routeur d'entrée T-PE1/interface d'entrée associée IFE et l'identifiant TAII3/interface de sortie associée IFS du premier routeur de sortie T-PE3 constitue également une FEC.

Le premier message d'établissement SIG1 se distingue d'un message classique d'établissement d'un pseudo-lien car il comporte des données supplémentaires telles que l'identifiant TAII3 du deuxième routeur de sortie T-PE3 et le paramètre « backup » renseignant sur la nature du deuxième pseudo-lien pw2 à établir.

Le message d'établissement SIG1 comporte également une étiquette lbl1 associée à la première liaison L1. Cette étiquette est utilisée par le routeur d'entrée T-PE1 et le routeur intermédiaire S-PE lors de la diffusion des flux de données. Cette étiquette est ajoutée par le routeur d'entrée T-PE1 à chaque paquet de données destiné à être émis vers le premier routeur de sortie T-PE2.

En référence à la figure 5, à réception du premier message d'établissement SIG1, le routeur intermédiaire S-PE extrait l'identifiant du routeur d'entrée T-PE1, l'identifiant du premier routeur de sortie T-PE2 ainsi que les informations contenues dans le champ supplémentaire du message SIG1, à savoir l'identifiant du deuxième routeur de sortie T-PE3 et le paramètre « backup ».

Fort de ces informations, le routeur intermédiaire S-PE complète une table de commutation TC. Cette table de commutation TC comporte pour une FEC donnée une information indiquant l'étiquette qui doit être insérée dans l'entête du message afin de procéder au saut suivant, ainsi que l'interface de sortie if2, if3 vers laquelle diriger les flux de données. La table de commutation TC est également complétée avec le paramètre « backup » indiquant la nature du deuxième pseudo-lien pw2.

Une fois la table de commutation TC complétée, le routeur intermédiaire émet deux messages d'établissement SIG2 et SIG3. Le message d'établissement SIG2 est émis à destination du premier routeur de sortie T-PE2, et le message d'établissement SIG3 est à destination du deuxième routeur de sortie T-PE3.

Le message SIG2 comporte l'identifiant SAII du routeur d'entrée T-PE1, l'identifiant d'une interface d'entrée IFE associée à un équipement connecté au routeur d'entrée, l'identifiant TAII2 du premier routeur de sortie T-PE2, l'identifiant d'une interface de sortie IFS2 associée à un équipement connecté au premier routeur de sortie T-PE2 ainsi que l'étiquette lbl2 associée à la liaison L2 et utilisée lors de la diffusion des données. Un tel message est représenté à la figure 6B.

Le message SIG3, quant à lui, comporte l'identifiant SAII du routeur d'entrée T-PE1 l'identifiant d'une interface d'entrée IFE associée à un équipement connecté au routeur d'entrée, l'identifiant TAII3 du deuxième routeur de sortie T-PE3, l'identifiant d'une interface de sortie IFS3 associée à un équipement connecté au premier routeur de sortie T-PE3 ainsi que l'étiquette lbl3 associée à la liaison L3 et utilisée lors de la diffusion des données. Un tel message est représenté à la figure 6C.

Une fois les pseudo-liens pw1 et pw2 établis, des flux de données sont diffusés entre le routeur d'entrée T-PE1 et le premier routeur de sortie T-PE2.

A réception d'un paquet de données émis par le routeur d'entrée T-PE1, le routeur intermédiaire S-PE utilise l'étiquette ajoutée au paquet par le routeur d'entrée pour déterminer, en fonction des informations contenues dans la table de commutation TC, vers quelle interface de sortie if2, if3 diriger le paquet de données. Les paquets émis à destination du premier routeur de sorite T-PE2 sont dirigés vers l'interface if2 du routeur intermédiaire S-PE. Cette interface if2 constitue une première extrémité de la liaison L2. Avant l'émission du paquet de données à destination du premier routeur de sortie T-PE2, la nouvelle étiquette Ib2 est ajoutée au paquet de données.

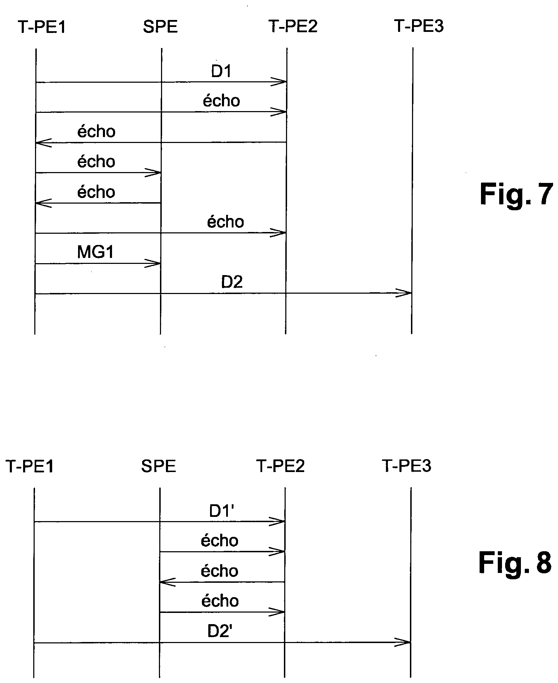

La figure 7 représente un diagramme temporel d'échange de messages entre le routeur d'entrée T-PE1, le routeur intermédiaire S-PE, le premier routeur de sortie T-PE2 et le troisième routeur de sortie T-PE3 lors de la diffusion de flux de données, dans une première variante de réalisation.

Un flux de données D1 est émis par le routeur d'entrée T-PE1 à destination du premier routeur de sortie T-PE2. Ce flux de données est diffusé à travers le réseau PSN au moyen du premier pseudo-lien pw1.

Afin d'assurer la continuité du service, le routeur d'entrée T-PE1 embarque une fonction de détection d'une défaillance du premier routeur de sortie T-PE2. Afin de détecter une telle défaillance, le routeur d'entrée T-PE1 échange régulièrement des messages « écho » avec le premier routeur de sortie T-PE2 ainsi qu'avec le routeur intermédiaire S-PE.

Lorsque le routeur d'entrée ne reçoit pas de réponse à un message « écho », il en déduit que le premier routeur de sortie T-PE2 ou le routeur intermédiaire S-PE est défaillant.

Si le routeur défaillant est le premier routeur de sortie T-PE1, il émet alors un message MG1 de basculement à destination du routeur intermédiaire S-PE. A réception de ce message, le routeur intermédiaire S-PE bascule les flux de données sur la liaison L3.

Un flux de données D2 émit par le routeur d'entrée T-PE1 suite à la détection de la défaillance du premier routeur de sortie T-PE2 est alors diffusé par le deuxième pseudo-lien pw2 et reçu par le deuxième routeur de sortie T-PE3.

La figure 8 représente un diagramme temporel d'échange de messages entre le routeur d'entrée T-PE1, le routeur intermédiaire S-PE, le premier routeur de sortie T-PE2 et le troisième routeur de sortie T-PE3 lors de la diffusion de flux de données, dans une deuxième variante de réalisation.

Un flux de données D1' est émis par le routeur d'entrée T-PE1 à destination du premier routeur de sortie T-PE2. Ce flux de données est diffusé à travers le réseau PSN au moyen du premier pseudo-lien pw1.

Afin d'assurer la continuité du service, le routeur intermédiaire S-PE embarque une fonction de détection d'une défaillance du premier routeur de sortie T-PE2. Afin de détecter une telle défaillance, le routeur intermédiaire S-PE échange régulièrement des messages « écho » avec le premier routeur de sortie T-PE2.

Lorsque le routeur intermédiaire ne reçoit pas de réponse à son message « écho », il en déduit que le premier routeur de sortie T-PE2 est défaillant. Il bascule alors les flux de données provenant du routeur d'entrée T-PE1 sur la liaison L3 et en informe le routeur d'entrée T-PE1.

Ainsi, un flux de données D2' émit par le routeur d'entrée T-PE1 suite à la détection de la défaillance du premier routeur de sortie est alors diffusé par le deuxième pseudo-lien pw2 et reçu par le deuxième routeur de sortie T-PE3.

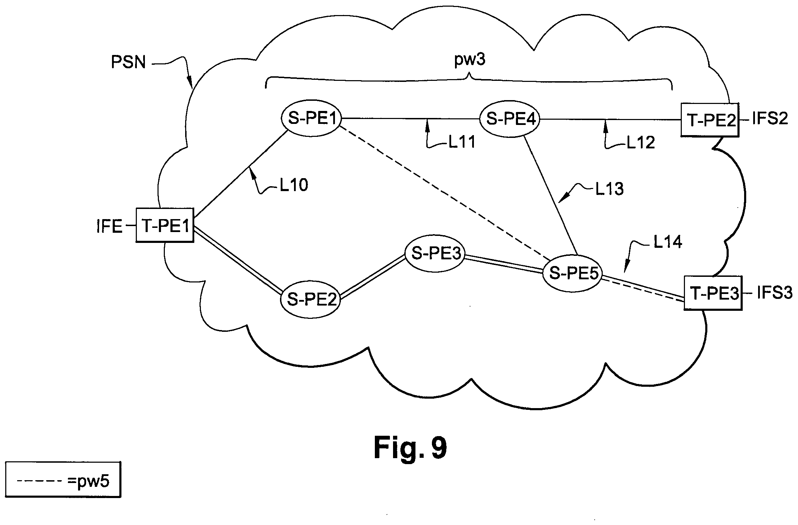

La figure 9 représente un réseau de commutation de paquets PNS comprenant une pluralité de routeurs d'extrémités T-PE1, T-PE2 et T-PE3 et une pluralité de routeurs intermédiaires S-PE1 à S-PE5. Dans un tel réseau, une connexion est établie entre un premier routeur d'entrée T-PE1 et un deuxième et un troisième routeur de sortie T-PE2 et T-PE3, chacun de ces trois routeurs étant disposé en bordure d'un réseau de commutation de paquets PSN.

En référence à cette figure, une première liaison L10 est établie entre le premier routeur d'entrée T-PE1 et un premier routeur intermédiaire S-PE1 appartenant au réseau PSN. Une deuxième liaison L11 est établie entre le premier routeur intermédiaire S-PE1 et un deuxième routeur intermédiaire S-PE4. Une troisième liaison L12 est établie entre le deuxième routeur intermédiaire S-PE4 et le deuxième routeur de sortie T-PE2. La première liaison 10, la deuxième liaison 11 et la troisième liaison 12 constituent un premier pseudo-lien pw3, dit pseudo-lien principal, établissant une connexion entre le premier routeur d'entrée T-PE1 et le deuxième routeur de sortie T-PE2. Le pseudo-lien pw3 ainsi établi permet de diffuser des flux de données découpées en paquets entre le routeur d'entrée T-PE1 et le routeur de sortie T-PE2.

Un deuxième pseudo-lien pw4, dit pseudo-lien de secours, est établi entre le premier routeur d'entrée T-PE1 et le troisième routeur de sortie T-PE3. Le pseudo-lien pw4 est constitué de la première liaison L10 et de la deuxième liaison L11, d'une troisième liaison L13 établie entre un troisième routeur intermédiaire S-PE5 et le troisième routeur de sortie T-PE3.

Ainsi, la liaison L10 et la liaison L11 sont communes aux deux pseudo-liens pw3 et pw4. Une telle solution permet d'optimiser les ressources du réseau, telles que la bande passante, entre le premier routeur d'entrée et le deuxième routeur intermédiaire S-PE4.

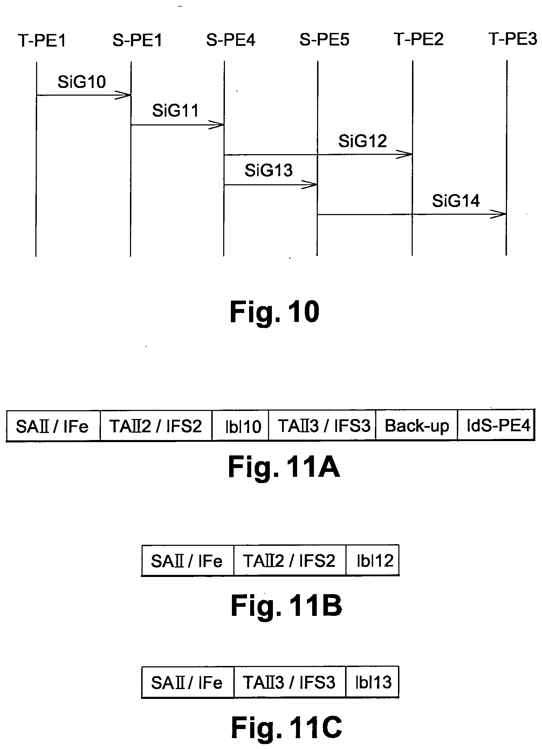

La figure 10 représente un diagramme temporel d'échange de messages entre le premier routeur d'entrée T-PE1, le premier, le deuxième et le troisième routeur intermédiaire S-PE1, S-PE4 et S-PE5 et le deuxième et le troisième routeur de sortie T-PE2 et T-PE3 lors de l'établissement des pseudo-liens pw3 et pw4.

Conformément à l'invention, l'établissement des pseudo-liens pw3 et pw4 est à l'initiative du premier routeur d'entrée T-PE1 et repose sur l'échange de messages d'établissement conformes au protocole LDP. Ainsi, un premier message d'établissement SIG10 est émis par le premier routeur d'entrée T-PE1 à destination du premier routeur intermédiaire S-PE1. Ce premier message d'établissement comporte un identifiant SAII du premier routeur d'entrée T-PE1, un identifiant d'une interface d'entrée IFE associée à un équipement connecté au routeur d'entrée, un identifiant TAII2 du deuxième routeur de sortie T-PE2, un identifiant d'une interface de sortie IFS2 associée à un équipement connecté au deuxième routeur de sortie T-PE2, ainsi qu'un champ comportant un identifiant TAII3 du troisième routeur de sortie T-PE3, un identifiant d'une interface de sortie IFS3 associée à un équipement connecté au troisième routeur de sortie T-PE3, un paramètre « backup » précisant que le deuxième pseudo-lien pw4 est un pseudo-lien de secours et un identifiant d'un routeur intermédiaire S-PE4 réalisant le basculement du premier pseudo-lien pw3 vers le deuxième pseudo-lien pw4 en cas de défaillance de la troisième liaison L12 constitutive du pseudo-lien pw3. Un tel message d'établissement SIG10 est représenté à la figure 11 A.

Le message d'établissement SIG10 peut comprendre plusieurs identifiants de routeurs de sortie à atteindre en cas de défaillance d'une liaison constitutive du premier pseudo-lien pw3. Un tel message comprend autant de paramètres « backup » qu'il ya de routeurs de sortie à atteindre et donc qu'il y a de pseudo-liens de secours à établir.

Un message d'établissement SIG10 peut également comprendre un champ supplémentaire comprenant une liste explicite des routeurs intermédiaire entre lesquels les liaisons constitutives du premier pseudo-lien pw3 doivent être établies.

Le message d'établissement SIG10 comporte également une étiquette lbl10. Cette étiquette est utilisée par le premier routeur d'entrée T-PE1 et le premier routeur intermédiaire S-PE1 lors de la diffusion des flux de données du routeur intermédiaire S-PE1 vers le premier routeur d'entrée T-PE1. Cette étiquette est ajoutée par le premier routeur intermédiaire S-PE1 à chaque paquet de données destiné à être émis vers le premier routeur d'entrée T-PE1.

A réception du premier message d'établissement SIG10, le routeur intermédiaire S-PE1 extrait l'identifiant du premier routeur d'entrée T-PE1, l'identifiant du deuxième routeur de sortie T-PE2 et le cas échéant la liste explicite des routeurs intermédiaires entre lesquels les liaisons constitutives du premier pseudo-lien pw3 doivent être établies.

Fort de ces informations, le premier routeur intermédiaire S-PE1 complète une table intermédiaire. Cette table intermédiaire comporte pour une FEC donnée une information indiquant l'étiquette qui doit être insérée dans l'entête du message afin de procéder au saut suivant, ainsi que l'interface de sortie vers laquelle diriger les flux de données.

Une fois la table de commutation complétée, le premier routeur intermédiaire émet un deuxième message d'établissement SIG11. Le message d'établissement SIG11 est émis à destination du deuxième routeur intermédiaire S-PE4.

Le saut que doit effectuer le message d'établissement SIG11 pour atteindre le deuxième routeur intermédiaire S-PE4 est déterminé au moyens des informations de routage contenues dans la table de commutation TC du routeur intermédiaire S-PE1.

De manière optionnelle, le message d'établissement SIG10 peut comprendre également un tel champ supplémentaire pour chaque pseudo-lien de secours à établir, spécifiant ainsi les routeurs intermédiaire entre lesquels les liaisons constitutives des pseudo-liens sont établies.

Le message SIG11 est identique au message SIG10, seule l'étiquette Ib112 à utiliser lors de la diffusion des données distingue les deux messages.

Les informations relatives au pseudo-lien de secours pw4, telles que l'identifiant du routeur intermédiaire devant réaliser le basculement du premier pseudo-lien pw3 vers le pseudo-lien de secours pw4 sont transmises d'un routeur intermédiaire à un autre jusqu'à ce que routeur intermédiaire devant réaliser le basculement soit atteint.

A réception de ce message d'établissement SIG11, le routeur intermédiaire S-PE4 extrait l'identifiant du premier routeur d'entrée T-PE1, l'identifiant du deuxième routeur de sortie T-PE2 et le cas échéant la liste explicite des routeurs intermédiaires entre lesquels les liaisons constitutives du premier pseudo-lien pw3 doivent être établies. La table de commutation est également complétée avec le paramètre « backup » indiquant la nature du deuxième pseudo-lien pw4.

Une fois la table de commutation du routeur intermédiaire S-PE4 complétée, celui-ci émet deux messages d'établissement SIG12 et SIG13 à destination respectivement du deuxième routeur de sortie T-PE2 et du troisième routeur intermédiaire S-PE5.

Le message SIG12 comporte l'identifiant SAII du premier routeur d'entrée T-PE1, l'identifiant d'une interface d'entrée IFE associée à un équipement connecté au routeur d'entrée, l'identifiant TAII2 du deuxième routeur de sortie T-PE2, l'identifiant d'une interface de sortie IFS2 associée à un équipement connecté au deuxième routeur de sortie T-PE2 ainsi que l'étiquette lbl12 à associer à la liaison L12 et utilisée lors de la diffusion des données. Un tel message est représenté à la figure 11 B.

Le message SIG13, quant à lui, comporte l'identifiant SAII du premier routeur d'entrée T-PE1, l'identifiant d'une interface d'entrée IFE associée à un équipement connecté au premier routeur d'entrée, l'identifiant TAII3 du troisième routeur de sortie T-PE3, l'identifiant d'une interface de sortie IFS3 associée à un équipement connecté au troisième routeur de sortie T-PE3 ainsi que l'étiquette lbl13 associée à la liaison L13 à établir et utilisée lors de la diffusion des données. Un tel message est représenté à la figure 11C. Un tel message peut comporter une liste explicite des routeurs intermédiaire entre lesquels les liaisons constitutives du deuxième pseudo-lien pw4 doivent être établies pour connecter le routeur intermédiaire S-PE4 au troisième routeur de sortie T-PE3.

Une fois les pseudo-liens pw3 et pw4 établis, des flux de données sont diffusés entre le routeur d'entrée T-PE1 et le premier routeur de sortie T-PE2.

A réception d'un paquet de données émis par le premier routeur d'entrée T-PE1, le premier routeur intermédiaire S-PE1 utilise l'étiquette ajoutée au paquet par le routeur T-PE1 pour déterminer, en fonction des informations contenues dans la table de commutation TC, vers quelle interface de sortie if2, if3 diriger le paquet de données. Les paquets émis à destination du deuxième routeur de sortie T-PE2 sont dirigés vers l'interface if2 du premier routeur intermédiaire S-PE1. Cette interface if2 constitue une première extrémité de la liaison L10. Avant l'émission du paquet de données à destination du deuxième routeur intermédiaire S-PE4, la nouvelle étiquette Ib11 est ajoutée au paquet de données.

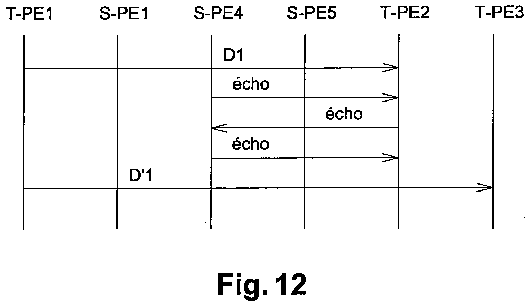

La figure 12 représente un diagramme temporel d'échange de messages entre le premier routeur d'entrée T-PE1, le premier routeur intermédiaire S-PE1, le deuxième routeur intermédiaire S-PE4, le troisième routeur intermédiaire S-PE5, le deuxième routeur de sortie T-PE2 et le troisième routeur de sortie T-PE3 lors de la diffusion de flux de données.

Un flux de données D1 est émis par le premier routeur d'entrée T-PE1 à destination du deuxième routeur de sortie T-PE2. Ce flux de données est diffusé à travers le réseau PSN au moyen du premier pseudo-lien pw3.

Afin d'assurer la continuité du service, le routeur intermédiaire S-PE4 embarque une fonction de détection d'une défaillance du deuxième routeur de sortie T-PE2. Afin de détecter une telle défaillance, le routeur intermédiaire S-PE4 échange régulièrement des messages « écho » avec le deuxième routeur de sortie T-PE2.

Lorsque le routeur intermédiaire ne reçoit pas de réponse à son message « écho », il en déduit que le deuxième routeur de sortie T-PE2 est défaillant. Il bascule alors les flux de données provenant du premier routeur d'entrée T-PE1 sur la liaison L12 et en informe le premier routeur d'entrée T-PE1.
Ainsi, un flux de données D'1 émis par le premier routeur d'entrée T-PE1 suite à la détection de la défaillance du deuxième routeur de sortie est alors diffusé par le deuxième pseudo-lien pw4 et reçu par le troisième routeur de sortie T-PE3.

L'invention permet également de protéger le réseau d'une défaillance de l'une des liaisons constitutives du premier pseudo-lien pw3 ou de l'un des routeurs intermédiaires appartenant au réseau PSN.

Par exemple, lors de l'établissement du premier pseudo-lien pw3, le message d'établissement SIG10, en plus des informations nécessaires à l'établissement du pseudo-lien pw4 de secours telles que l'identifiant TAII3 du troisième routeur de sortie T-PE3, le paramètre « backup » et l'identifiant du routeur intermédiaire S-PE4, contient des informations supplémentaires nécessaire à l'établissement d'un troisième pseudo-lien de secours pw5 (représenté par les lignes en pointillés sur la figure 9).

Ces informations consistent en l'identifiant TAII3 du troisième routeur de sortie T-PE3, l'identifiant d'une interface de sortie IFS3 associée à un équipement connecté au troisième routeur de sortie T-PE3, un paramètre « backup » précisant que le troisième pseudo-lien pw5 est un pseudo-lien de secours et un identifiant d'un routeur intermédiaire S-PE5 réalisant le basculement du premier pseudo-lien pw3 vers le troisième pseudo-lien pw5 en cas de défaillance de la deuxième liaison L11 constitutive du pseudo-lien pw3 ou du routeur intermédiaire S-PE4.

Ainsi, lorsque le routeur intermédiaire S-PE1 détecte une défaillance de la liaison L11 ou du routeur intermédiaire S-PE4, il en informe le premier routeur d'entrée T-PE1 et procède au basculement du flux de données à diffuser vers le troisième pseudo-lien pw5.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé de diffusion de flux de données au travers d'au moins un premier pseudo-lien, comprenant une étape de réception d'un message d'établissement du premier pseudo-lien constitué d'une première liaison entre un routeur d'entrée et un routeur intermédiaire, et d'une deuxième liaison établie entre le routeur intermédiaire et un premier routeur de sortie, lesdits routeurs appartenant à un réseau de commutation de paquets, mis en oeuvre par le routeur intermédiaire, le premier pseudo-lien étant apte à diffuser le flux de données,
**caractérisé en ce que** le message concerne en outre l'établissement d'un deuxième pseudo-lien constitué de ladite première liaison et d'une troisième liaison établie entre le routeur intermédiaire et un deuxième routeur de sortie, ladite première liaison étant commune aux deux pseudo-liens,
**en ce que** le message d'établissement comporte un identifiant dudit routeur d'entrée, un identifiant du premier routeur de sortie, et un champ comprenant un identifiant du deuxième routeur de sortie ainsi qu'un paramètre précisant que le deuxième pseudo-lien est un pseudo-lien de secours, et
**en ce que** le procédé de diffusion comporte une étape d'ajout desdits identifiants et dudit paramètre dans une table de commutation, une étape d'établissement du premier pseudo-lien et du deuxième pseudo-lien, et une étape de basculement, sur réception d'un message de basculement, ou sur détection d'une défaillance du premier routeur de sortie, de la diffusion du flux de données vers le deuxième pseudo-lien à l'aide de ladite table.

2. Routeur destiné à être connecté par une première liaison à un routeur d'entrée et par une deuxième liaison à un premier routeur de sortie, lesdits routeurs ainsi connectés appartenant à un réseau de commutation de paquets, lesdites premières et deuxièmes liaisons étant constitutives d'un premier pseudo-lien apte à diffuser un flux de données, **caractérisé en ce que** ledit routeur comprend :
- des moyens de réception d'un premier message d'établissement de la première liaison, comportant un identifiant dudit routeur d'entrée, un identifiant du premier routeur de sortie, et un champ contenant un identifiant d'un deuxième routeur de sortie appartenant au réseau,
- des moyens d'émission d'un deuxième message d'établissement de ladite deuxième liaison entre ledit routeur et ledit premier routeur de sortie et d'un troisième message d'établissement d'une troisième liaison entre ledit routeur et ledit deuxième routeur de sortie, le deuxième message comportant l'identifiant du routeur d'entrée, et l'identifiant du premier routeur de sortie, le troisième message comportant l'identifiant du routeur d'entrée et l'identifiant du deuxième routeur de sortie, lesdites première et troisième liaisons constituant un deuxième pseudo-lien,
- des moyens de configuration d'au moins une table de commutation, en vue de ladite diffusion avec un paramètre précisant que le deuxième pseudo-lien est un pseudo-lien de secours, ledit paramètre étant compris dans le premier message d'établissement, et
- des moyens de détection d'une défaillance du premier routeur de sortie et des moyens de basculement du flux de données de la deuxième liaison vers la troisième liaison.

3. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de diffusion selon la revendication 1 lorsque ledit programme est exécuté par un ordinateur.

## Patentansprüche

1. Verfahren zur Übertragung von Datenströmen über wenigstens ein erstes Pseudowire, umfassend einen Schritt des Empfangs einer Einrichtungsnachricht des ersten Pseudowire, die aus einer ersten Verbindung zwischen einem Eingangsrouter und einem Zwischenrouter und einer zweiten Verbindung, die zwischen dem Zwischenrouter und einem ersten Ausgangsrouter eingerichtet wird, besteht, wobei diese Router zu einem paketvermittelten Netz gehören, das von dem Zwischenrouter verwaltet wird, wobei das erstes Pseudowire geeignet ist, den Datenstrom zu übertragen,
**dadurch gekennzeichnet, dass** die Nachricht außerdem die Einrichtung eines zweiten Pseudowire betrifft, die aus der ersten Verbindung und einer dritten Verbindung, die zwischen dem Zwischenrouter und einem zweiten Ausgangsrouter eingerichtet wird, besteht, wobei die erste Verbindung der zwei Pseudowiresgemeinsam ist, dadurch, dass die Einrichtungsnachricht eine Kennung des Eingangsrouters, eine Kennung des ersten Ausgangsrouters und ein Feld beinhaltet, das eine Kennung des zweiten Ausgangsrouters sowie einen Parameter, der präzisiert, dass das zweites Pseudowire ein Hilfs-Pseudowire ist, umfasst, und dadurch, dass das Verfahren zur Übertragung einen Schritt der Hinzufügung der Kennungen und des Parameters in einer Vermittlungstabelle, einen Schritt der Einrichtung des ersten Pseudowire und des zweiten Pseudowire und einen Schritt der Umschaltung, bei Empfang einer Umschaltnachricht oder bei Erkennung eines Ausfalls des ersten Ausgangsrouters, der Übertragung des Datenstroms zum zweiten Pseudowire mithilfe der Tabelle umfasst.

2. Router, der dazu bestimmt ist, durch eine erste Verbindung mit einem Eingangsrouter und durch eine zweite Verbindung mit einem ersten Ausgangsrouter verbunden zu werden, wobei die so verbundenen Router zu einem paketvermittelten Netz gehören, wobei die erste und die zweite Verbindung Bestandteile eines ersten Pseudowire sind, die geeignet ist, einen Datenstrom zu übertragen, **dadurch gekennzeichnet, dass** der Router umfasst:
- Mittel zum Empfang einer ersten Einrichtungsnachricht der ersten Verbindung, die eine Kennung des Eingangsrouters, eine Kennung des ersten Ausgangsrouters und ein Feld, das eine Kennung eines zu dem Netz gehörenden zweiten Ausgangsrouters enthält, beinhaltet,
- Mittel zum Senden einer zweiten Einrichtungsnachricht der zweiten Verbindung zwischen dem Router und dem ersten Ausgangsrouter und einer dritten Einrichtungsnachricht einer dritten Verbindung zwischen dem Router und dem zweiten Ausgangsrouter, wobei die zweite Nachricht die Kennung des Eingangsrouters und die Kennung des ersten Ausgangsrouters beinhaltet, wobei die dritte Nachricht die Kennung des Eingangsrouters und die Kennung des zweiten Ausgangsrouters beinhaltet, wobei die erste und die dritte Verbindung ein zweites Pseudowire bilden,
- Mittel zur Konfiguration wenigstens einer Vermittlungstabelle im Hinblick auf die Übertragung mit einem Parameter, der präzisiert, dass das zweite Pseudowire ein Hilfs-Pseudowire ist, wobei dieser Parameter in der ersten Einrichtungsnachricht enthalten ist, und
- Mittel zur Erkennung eines Ausfalls des ersten Ausgangsrouters und Mittel zur Umschaltung des Datenstroms der zweiten Verbindung zur dritten Verbindung.

3. Computerprogrammprodukt, das von einem Kommunikationsnetz herunterladbar und/oder auf einem computerlesbaren Datenträger aufgezeichnet und/oder von einem Prozessor ausführbar ist, **dadurch gekennzeichnet, dass** es Programmcodeanweisungen zur Durchführung des Verfahrens zur Übertragung nach Anspruch 1, wenn dieses Programm von einem Computer ausgeführt wird, umfasst.

## Claims

1. Method of broadcasting data streams through at least one first pseudo-wire, comprising a step of receiving a message of establishment of the first pseudo-wire consisting of a first link between an input router and an intermediate router, and of a second link established between the intermediate router and a first output router, said routers belonging to a packet switching network, implemented by the intermediate router, the first pseudo-wire being able to broadcast the data stream,
**characterized in that** the message further relates to the establishment of a second pseudo-wire consisting of said first link and of a third link established between the intermediate router and a second output router, said first link being common to the two pseudo-wires,
**in that** the establishment message comprises an identifier of said input router, an identifier of the first output router, and a field comprising an identifier of the second output router as well as a parameter specifying that the second pseudo-wire is a backup pseudo-wire, and
**in that** the broadcasting method comprises a step of adding said identifiers and said parameter into a switching table, a step of establishing the first pseudo-wire and the second pseudo-wire, and a step of toggling, on receiving a toggling message, or on detecting a failure of the first output router, the broadcasting of the data stream over to the second pseudo-wire with the aid of said table.

2. Router intended to be linked by a first connection to an input router and by a second link to a first output router, said routers thus linked belonging to a packet switching network, said first and second links being constituents of a first pseudo-wire able to broadcast a data stream, **characterized in that** said router comprises:
- means for receiving a first message of establishment of the first link, comprising an identifier of said input router, an identifier of the first output router, and a field containing an identifier of a second output router belonging to the network,
- means for emitting a second message of establishment of said second link between said router and said first output router and a third message of establishment of a third link between said router and said second output router, the second message comprising the identifier of the input router, and the identifier of the first output router, the third message comprising the identifier of the input router and the identifier of the second output router, said first and third links constituting a second pseudo-wire,
- means for configuring at least one switching table, with a view to said broadcasting with a parameter specifying that the second pseudo-wire is a backup pseudo-wire, said parameter being included in the first establishment message, and
- means for detecting a failure of the first output router and means for toggling the data stream from the second link over to the third link.

3. Computer program product downloadable from a communication network and/or recorded on a medium readable by computer and/or executable by a processor, **characterized in that** it comprises program code instructions for the implementation of the broadcasting method according to Claim 1 when said program is executed by a computer.
